# FASCICULE DE BREVET EUROPEEN

(11) **EP 3 921 695 B1**
(45) Date de publication et mention de la délivrance du brevet: **25.01.2023**
(21) Numéro de dépôt: 20703230.1
(22) Date de dépôt: 04.02.2020
(51) Int. Cl.: G02B 27/10, G02B 27/09

(54) **DISPOSITIF OPTIQUE DE COMBINAISON D'UNE PLURALITE DE FAISCEAUX, ET SYSTÈME EMPLOYANT UN TEL DISPOSITIF**
OPTISCHE VORRICHTUNG MIT KOMBINATION MEHRERER STRAHLEN UND SYSTEM DAMIT
OPTICAL DEVICE COMBINING A PLURALITY OF BEAMS AND SYSTEM USING SAME

(30) Priorité: 04.02.2019 FR 1901034
(43) Date de publication de la demande: 15.12.2021
(73) Titulaire: Cailabs, 35200 Rennes (FR)
(72) Inventeur: PINEL, Olivier, 35000 Rennes (FR); LABROILLE, Guillaume, 35000 Rennes (FR)
(74) Mandataire: IP Trust
(86) Numéro de dépôt international: PCT/EP2020/052738
(87) Numéro de publication internationale: WO 2020/161126

(56) Documents cités:
- WO-A2-2007/100752
- US-B1- 9 945 731
- GUILLAUME LABROILLE ET AL: "Mode Selective 10-Mode Multiplexer based on Multi-Plane Light Conversion", OPTICAL FIBER COMMUNICATION CONFERENCE 2016, ANAHEIM, CALIFORNIA UNITED STATES, 20-22 MARCH 2016, 1 janvier 2016 (2016-01-01), XP055509732, US DOI: 10.1364/OFC.2016.Th3E.5 ISBN: 978-1-943580-07-1
- CARPENTER JOEL ET AL: "Multi-plane light conversion with low plane count", 2017 CONFERENCE ON LASERS AND ELECTRO-OPTICS EUROPE & EUROPEAN QUANTUM ELECTRONICS CONFERENCE (CLEO/EUROPE-EQEC), IEEE, 25 juin 2017 (2017-06-25), page 1, XP033240684, DOI: 10.1109/CLEOE-EQEC.2017.8087731

## Description

### DOMAINE DE L'INVENTION

La présente invention concerne un dispositif optique pour former un faisceau lumineux par combinaison d'une pluralité de faisceaux lumineux d'entrée. Elle concerne également un système de production d'un faisceau lumineux de sortie, comprenant une source lumineuse produisant une pluralité de faisceaux qui sont associés à un tel dispositif optique.

### ARRIERE PLAN TECHNOLOGIQUE DE L'INVENTION

Dans le domaine de l'optique, on cherche parfois à combiner une pluralité de faisceaux lumineux, par exemple issus d'une pluralité de sources lasers arrangées en matrice, pour former un unique faisceau lumineux présentant une puissance accrue. Cette combinaison peut par exemple s'opérer à partir de faisceaux lumineux cohérents ou de faisceau présentant des spectres étagés. On cherche généralement à préserver la qualité du faisceau combiné, et notamment sa divergence. C'est notamment important lorsque le faisceau combiné est destiné à éclairer une cible disposée en champ lointain.

On connaît ainsi du document WO2007100752 un dispositif de combinaison cohérente dans lequel un élément optique agence une pluralité de faisceaux asservis en phase les uns par rapport aux autres pour qu'ils se projettent selon des angles choisis sur un réseau diffractif, ce qui conduit à les combiner. Lorsque l'asservissement des faisceaux n'est pas parfait (ce qui n'est pratiquement jamais le cas), la qualité du faisceau combiné n'est pas choisie ou maîtrisée. Le faisceau tend dans ce cas à présenter des composantes selon les ordres supérieurs de diffraction du réseau, et donc à former un faisceau discret c'est à dire non concentré spatialement, ce qui n'est pas toujours souhaitable.

On connaît aussi le produit « TILBA » de la société Cailabs, qui met en œuvre un dispositif de conversion lumineux multiplan pour combiner une pluralité de faisceaux mutuellement cohérents. Ce dispositif est configuré pour mettre en oeuvre une conversion modale, transformant des modes d'entrée correspondant respectivement aux lobes de la pluralité de faisceaux en un mode de sortie gaussien. Au cours de la conversion modale mise en œuvre par ce dispositif, toute l'énergie du rayonnement incident (formé par la pluralité de faisceaux lumineux) présente dans le mode d'entrée est transportée dans le mode de sortie gaussien.

Il est toutefois particulièrement délicat d'obtenir et de maintenir la cohérence parfaite des faisceaux en entrée du dispositif de conversion, par exemple sous une valeur seuil de 0,5 rad rms. C'est notamment le cas lorsque le nombre de faisceaux est important, par exemple supérieur à 10.

Lorsque les faisceaux d'entrée ne sont pas parfaitement cohérents ou, dans une moindre mesure, lorsque les intensités des faisceaux d'entrée ne sont pas égales entre elles, la transformation modale réalisée par ce dispositif n'est pas parfaitement contrôlée, ce qui peut conduire à détériorer la qualité du faisceau combiné, par exemple en augmentant sa divergence ou en déviant son pointé. Dit autrement, l'énergie du rayonnement incident ne sera pas transportée entièrement dans le mode de sortie visé. Une partie de cette énergie peut être absorbée ou diffusée par le dispositif de conversion et/ou former un faisceau combiné présentant un rayonnement de faible intensité combiné à un halo diffus.

### OBJET DE L'INVENTION

Un but de l'invention est de remédier au moins en partie aux inconvénients précités. Plus précisément, un but de l'invention est de former un faisceau combiné dont les propriétés sont contrôlées, même lorsque les faisceaux d'entrée ne sont pas mutuellement cohérents et/ou lorsque leurs intensités diffèrent.

### BREVE DESCRIPTION DE L'INVENTION

En vue de la réalisation de ce but, l'objet de l'invention propose un dispositif optique pour former un faisceau lumineux de sortie présentant au moins un mode cible, par combinaison d'une pluralité de faisceaux lumineux d'entrée asservis en phase pour présenter une différence de phase prédéterminée formant collectivement un rayonnement lumineux incident. Le dispositif optique présente :
- un plan d'entrée transverse aux faisceaux lumineux d'entrée dans lequel est définie une base de modes d'entrée composée d'un supermode principal formé d'une combinaison linéaire de modes primaires présentant chacun une phase et une amplitude déterminée, les modes primaires étant respectivement associés spatialement avec les faisceaux lumineux d'entrée et dans lequel est définie une pluralité de supermodes de perturbation ;
- un plan de sortie transverse au faisceau lumineux de sortie dans lequel est définie une base de modes de sortie composée du mode cible et d'une pluralité de modes de déformation.

Le dispositif optique comprend également un dispositif de conversion lumineux multiplan, comprenant une pluralité de zones microstructurées disposées sur au moins un élément optique pour intercepter et modifier spatialement la phase du rayonnement lumineux incident au cours d'une pluralité de réflexions ou de transmissions séparées par une propagation libre, le dispositif de conversion lumineux multiplan disposé entre le plan d'entrée et le plan de sortie, et la microstructuration de la pluralité de zones microstructurées étant configurée pour opérer une conversion modale du rayonnement incident et préparer un rayonnement transformé, la conversion modale visant à transporter la part d'énergie du rayonnement incident présente dans le supermode principal dans le mode cible, et visant à transporter la part d'énergie du rayonnement incident présente dans les supermodes de perturbation dans les modes de déformation..

Selon d'autres caractéristiques avantageuses et non limitatives de l'invention, prises seules ou selon toute combinaison techniquement réalisable :
- les faisceaux lumineux d'entrée sont répartis linéairement en barrette selon une unique direction du plan d'entrée, ou en matrice ou en hexagone selon deux directions du plan d'entrée ;
- les supermodes de la base d'entrée présentent tous la même intensité ;
- le mode cible est choisi dans la liste constituée d'un mode gaussien, d'un mode à plateau plat , en champ lointain ou en champ proche, de forme circulaire, rectangulaire ou carré ;
- la base d'entrée comprend N-1 supermodes de perturbations, un supermode de perturbation d'ordre k, 2<=k<=N étant défini comme le produit, en tout point du plan d'entrée (x,y), du supermode principal avec la fonction de Walsh d'ordre k, Wk(x,y) ;
- le dispositif optique comprend un dispositif de filtrage modal intégré dans le dispositif de conversion ou disposé entre le plan d'entrée et le dispositif de conversion, pour éliminer des modes secondaires des faisceaux lumineux d'entrée ;
- les modes de déformation sont spatialement superposés au mode cible dans le plan de sortie et le faisceau lumineux de sortie est entièrement formé du rayonnement transformé par le dispositif de conversion.
- les modes de déformation sont spatialement séparés du mode cible dans le plan sortie et le faisceau lumineux de sortie est uniquement formé de la part du rayonnement transformé dans le mode cible par le dispositif de conversion ;
- les modes de déformation sont spatialement séparés les uns des autres et le dispositif forme également des faisceaux lumineux de sortie complémentaires, respectivement formés de la part du rayonnement transformé dans les modes de déformation par le dispositif de conversion ;
- les modes de déformation présentent une portion spatialement superposée au mode cible et une autre portion des modes de déformation étant spatialement séparée du mode cible ;
- les portions des modes de déformation spatialement séparées du mode cible sont également spatialement séparés les unes des autres et forment des faisceaux lumineux de sortie complémentaires.

Selon un autre aspect, l'objet de l'invention propose un système de production d'un faisceau lumineux de sortie, comprenant :
- au moins une source produisant une pluralité de faisceaux asservis en phase ;
- un dispositif de commande de la phase de la pluralité de faisceaux ;
- un dispositif optique comme défini précédemment, le dispositif optique étant disposé en aval de la source de manière à mettre en correspondance optique la pluralité de faisceaux avec les modes primaires du supermode principal du plan d'entrée du dispositif.

Selon d'autres caractéristiques avantageuses et non limitatives de cet aspect de l'invention, prises seules ou selon toute combinaison techniquement réalisable :
- le dispositif de commande est configuré pour asservir la phase de la pluralité de faisceaux à une consigne de déphasage mutuel correspondant au déphasage mutuel des modes primaires du supermode principal ;
- le dispositif de commande est configuré pour asservir la phase de la pluralité de faisceaux à une consigne de déphasage mutuelle pilotée pour modifier la forme du faisceau de sortie ;
- le faisceau lumineux de sortie est destiné à éclairer une cible en champ lointain et le système de production comprend au moins un détecteur d'un rayonnement réfléchi par la cible, le détecteur étant relié au dispositif de commande.

### BREVE DESCRIPTION DES FIGURES

D'autres caractéristiques et avantages de l'invention ressortiront de la description détaillée de l'invention qui va suivre en référence aux figures annexées sur lesquels :
- La figure 1 représente un dispositif optique conforme à la présente invention ;
- La figure 2 représente un exemple d'une famille de modes d'entrée permettant de concevoir un dispositif optique conforme à l'invention ;
- La figure 3 représente une méthode de conception d'une famille de modes d'entrée fondée sur les fonctions de Walsh.
- La figure 4 représente une première configuration de la disposition spatiale des modes de déformation de la base de sortie ;
- La figure 5 représente une deuxième configuration de la disposition spatiale des modes de déformation de la base de sortie ;
- La figure 6 représente une troisième configuration de la disposition spatiale des modes de déformation de la base de sortie ;
- La figure 7 représente un dispositif de conversion d'un dispositif optique conforme à l'invention ;
- La figure 8 représente une première architecture d'un système de production d'un faisceau de sortie ;
- La figure 9 représente une deuxième architecture d'un système de production d'un faisceau de sortie ;
- La figure 10 représente une troisième architecture d'un système de production d'un faisceau de sortie ;
- La figure 11 représente une autre architecture d'un système de production d'un faisceau lumineux de sortie.

### DESCRIPTION DETAILLEE DE L'INVENTION

Par souci de clarté, on définit dans la présente demande un rayonnement lumineux comme un rayonnement formé d'au moins un mode du champ électromagnétique, chaque mode formant une distribution spatio-fréquentielle de l'amplitude, de la phase, et de la polarisation du champ. En conséquence, la modification ou la transformation de la phase du rayonnement lumineux désigne la modification ou la transformation spatio-fréquentielle de chacun des modes du rayonnement.

On désignera par « forme » d'un rayonnement la distribution transverse de l'amplitude et de la phase du mode ou la combinaison des distributions transverses d'amplitude et de phase des modes composant ce rayonnement.

Par souci de simplification, on considérera dans la présente description que le rayonnement est polarisé selon une unique direction et présente une unique fréquence. Toutefois les principes exposés sont tout à fait applicables à un rayonnement présentant plus d'une direction de polarisation ou plus d'une unique fréquence.

D'une manière très générale, un dispositif optique conforme à la présente description met en oeuvre des moyens aptes à modifier la forme d'un rayonnement lumineux, tel que ce terme a été défini précédemment. Cette modification peut être précisément décrite sous une forme modale, c'est-à-dire en définissant comment des modes d'entrée d'une famille de modes définie dans un plan transverse d'entrée sont transformés en des modes de sortie d'une famille de modes de sortie définie dans un plan transverse de sortie. La famille de modes d'entrée et de sortie forment généralement des bases orthonormées et permettent de décomposer un rayonnement lumineux quelconque.

Une telle transformation décrite sous forme modale peut être mise en oeuvre, par différents types de dispositifs de conversion. Il peut ainsi s'agir d'un dispositif utilisant des modulateurs de phase et des lames séparatrices tel que décrit dans le document de Ryf, Roland, et al. "Mode-Division Multiplexing Over 96 km of Few-Mode Fiber Using Cohérent 6*6 MIMO Processing" Journal of Lightwave technology 30.4 (2012): 521-531.

Une transformation modale unitaire peut également être mise en oeuvre par un dispositif de conversion de lumière multiplan, plus communément désigné par les termes anglo-saxons « Multi-Plane Light Converter » (MPLC).

Par souci d'exhaustivité, on rappelle que dans un tel dispositif, un rayonnement lumineux incident subit une succession de réflexions et/ou de transmissions, chaque réflexion et/ou transmission étant suivie par une propagation du rayonnement en espace libre. Certaines au moins des pièces optiques sur lesquelles s'opèrent les réflexions et/ou les transmissions, et qui guident la propagation du rayonnement incident, présentent une surface microstructurée qui modifie le rayonnement lumineux incident.

Par « surface microstructurée » on signifie que la surface de la pièce optique présente un relief, qui peut par exemple se décomposer sous la forme de « pixels » dont les dimensions sont comprises entre quelques microns à quelques centaines de microns. Le relief ou chaque pixel de ce relief présente une élévation variable par rapport à un plan moyen définissant la surface en question, d'au maximum quelques microns ou d'au maximum quelques centaines de microns. Une pièce optique présentant une telle surface microstructurée forme un masque de phase introduisant un déphasage local au sein de la section transverse du rayonnement qui s'y réfléchit ou qui s'y transmet.

Ainsi, un rayonnement lumineux qui se propage au sein d'un dispositif MPLC subit une succession de déphasages locaux séparés par des propagations. La succession de ces transformations élémentaires (par exemple au moins quatre transformations successives comme par exemple 8, 10, 12, 14, voire au moins 20 transformations) établit une transformation globale du profil spatial du rayonnement incident. Il est ainsi possible de configurer les surfaces microstructurées de réflexion ou de transmission pour transformer un premier rayonnement lumineux, qui présente notamment une forme spécifique, en un deuxième rayonnement dont la forme est différente.

On trouvera dans les documents « Programmable unitary spatial mode manipulation », Morizur et Al, J. Opt. Soc. Am. A/Vol. 27, No. 11/November 2010 *;* N. Fontaine et Al, (ECOC, 2017),"Design of High Order Mode-Multiplexers using Multiplane Light Conversion"; US9250454 et US2017010463 les fondements théoriques et des exemples de mise en oeuvre pratique d'un dispositif MPLC.

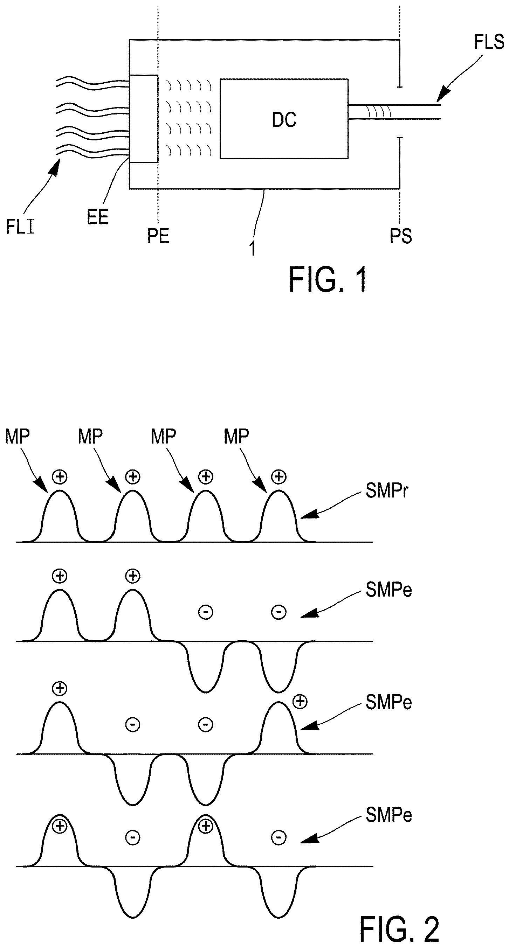

Revenant à l'objet de la présente description, et en référence à la figure 1, on cherche à réaliser un dispositif optique 1 passif combinant une pluralité de faisceaux lumineux d'entrée FLI, asservis en phase pour présenter une différence de phase prédéterminée, formant collectivement un rayonnement lumineux incident en un faisceau lumineux de sortie FLS présentant un mode cible. Les faisceaux lumineux d'entrée FLI sont sensiblement parallèles entre eux, si bien qu'il existe un plan transverse qui leur soit tous sécant. La transformation du rayonnement lumineux incident est opérée par un dispositif de conversion DC. Le dispositif optique 1 peut également comporter d'autres faisceaux lumineux en sortie, désignés faisceaux lumineux complémentaires, non représentés sur la figure 1. Les faisceaux lumineux complémentaires, lorsqu'ils sont présents, sont spatialement séparés du faisceau lumineux de sortie.

Comme cela est décrit dans le détail dans la suite de cette description, lorsque les faisceaux lumineux d'entrée FLI sont parfaitement mutuellement cohérents, qu'ils présentent entre eux un déphasage prédéterminé et une intensité conforme, toute l'énergie du rayonnement incident est transportée dans le mode cible.

Par mode cible, on désigne un mode qui est choisi à l'avance pour les besoins de l'application visée. Il peut ainsi s'agir d'un mode gaussien, d'un mode à plateau plat (dit « top-hat » selon l'expression anglo-saxonne usuellement employée) circulaire, rectangulaire ou carré (ces trois derniers modes pouvant être définis en champ lointain ou en champ proche).

Toutefois, et comme cela a été rappelé en introduction de cette demande, il n'est généralement pas possible d'assurer un déphasage prédéterminé parfait des faisceaux d'entrée. Dans une moindre mesure, le contrôle de l'intensité de chaque faisceau peut également être imparfait. Il convient alors de maîtriser la manière avec laquelle le faisceau lumineux de sortie sera formé dans ces cas, ce que la présente description propose de traiter en appliquant une approche modale à ce problème. Cette approche vise à concevoir le dispositif de conversion DC configuré pour associer les modes convenablement choisis d'une base de modes d'entrée et d'une base de modes de sortie.

À cet effet, on pose un plan d'entrée PE transverse aux faisceaux lumineux d'entrée FLI et un plan de sortie PS transverse au faisceau lumineux de sortie FLS afin de pouvoir décrire respectivement le rayonnement incident et le rayonnement transformé, et définir la transformation qui sera opérée par le dispositif de conversion DC disposé entre ces deux plans.

### Base d'entrée

Dans le plan d'entrée PE, on définit une famille de modes d'entrée, qui préférentiellement forment une base orthonormée du rayonnement lumineux incident, constituée d'un supermode principal et de supermodes de perturbation.

Le supermode principal est lui-même constitué d'une combinaison cohérente de modes primaires et son intensité correspond à la somme des intensités de ces modes primaires. En d'autres termes, le supermode principal est une combinaison linéaire de ces modes primaires. Les modes primaires correspondent aux modes des faisceaux d'entrée. Chaque mode primaire est donc spatialement associé à un faisceau d'entrée FLI, c'est-à-dire qu'il présente un lobe disposé spatialement à l'intersection de ce faisceau et du plan d'entrée. Les faisceaux peuvent être monomodes ou multimodes. Il y a donc, dans le supermode principal, au moins autant de modes primaires que de faisceaux d'entrée FLI.

Les modes primaires du supermode principal ne sont pas nécessairement tous identiques entre eux, et ils présentent chacun une phase et une amplitude déterminée. Dans les cas d'usages privilégiés, les faisceaux d'entrée sont préparés identiquement et présentent tous le même profil d'intensité. En conséquence, dans ces cas d'usages, le mode primaire ou les modes primaires associé(s) à un faisceau d'entrée est (sont) identique(s) d'un faisceau à l'autre. Les modes primaires du supermode principal présentent entre eux un déphasage prédéterminé (qui peut être nul) si bien que lorsque les faisceaux d'entrée FLI présentent entre eux ce déphasage, ils se projettent alors parfaitement dans le supermode principal.

Bien entendu, pour assurer cette parfaite projection, il est également important que les faisceaux d'entrée FLI présentent une intensité qui correspond, dans le plan d'entrée, aux intensités des modes primaires auxquels ils sont associés. Mais d'une manière générale, un dispositif conforme à l'invention est bien moins sensible à un écart d'intensité, que l'on peut facilement ajuster, qu'à un écart de phase qui formera donc la première préoccupation de la présente description.

Pour garder toute sa généralité à cette description sans la complexifier à l'excès, on indiquera que les faisceaux lumineux d'entrée sont « verrouillés » lorsqu'ils présentent entre eux les déphasages prédéterminés choisis, ceux-ci pouvant être nuls ou non nuls, et qu'ils présentent un profil d'intensité conforme au profil d'intensité défini par les modes primaires du supermode principal.

La base d'entrée est également formée d'une pluralité de supermodes de perturbation. Ces supermodes visent à représenter les composantes des faisceaux lumineux d'entrée FLI qui ne se projettent pas parfaitement dans le supermode principal. La base de modes d'entrée permet donc de décomposer le rayonnement lumineux incident comme la combinaison du supermode principal, pour la partie « verrouillée » des faisceaux d'entrée FLI, et de supermodes de perturbation pour la partie non « verrouillée » de ces faisceaux.

On peut former les supermodes de perturbation à partir du supermode principal, certains des modes primaires d'un supermode de perturbation étant déphasés vis-à-vis de ces mêmes modes primaires du supermode principal. D'une manière plus générale, dans un dispositif présentant N modes primaires, on complète le supermode principal par N-1 supermodes de perturbation, chacun formé d'une combinaison linéaire complexes des modes primaires, de manière à former la base orthonormée d'entrée. Dans les cas d'usage privilégiés dans lesquels les modes primaires présentent tous le même profil d'intensité, les supermodes de perturbation peuvent alors tous présenter le même profil d'intensité que le supermode principal, et seul leur profil de phase les différencie.

On a ainsi représenté sur la figure 2 l'intensité d'un supermode principal SMPr selon un axe X du plan d'entrée PE. Le supermode principal SMPr est ici composé de quatre modes primaires MP uniformément répartis selon l'axe X, chaque mode primaire MP étant ici gaussien. Sous le supermode principal SMPr, on a représenté sur la figure 2 des exemples de supermodes de perturbations SMPe. Chacun de ces modes de perturbations SMPe comporte des modes primaires MP identiques à ceux du supermode principal SMPr (dénoté « + » sur la figure 2) et au moins un mode primaire MP (dénoté « - » sur la figure 2) présentant une phase opposée à celle du mode primaire MP correspondant dans le supermode principal SMPr. Les quatre supermodes de la figure 2 forment ainsi une famille de modes d'entrée qui peut être exploitée pour concevoir un dispositif de conversion compatible avec la présente description.

D'une manière plus générale, et lorsque le dispositif vise à combiner N faisceaux lumineux d'entrée équidistants et répartis le long d'un axe X, le supermode principal présente N modes primaires. Si les modes primaires sont de même intensité, on peut également exprimer N-1 supermodes de perturbation d'ordre k (k = 2 à N), un supermode de perturbation d'ordre k étant défini comme le produit du supermode principal avec la fonction de Walsh Wₖ(x) .

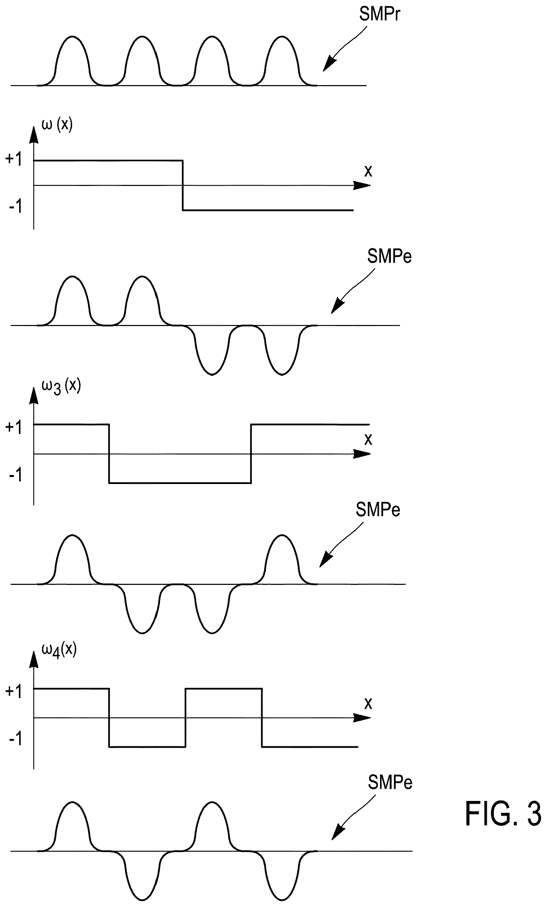

On a ainsi représenté sur la figure 3, un supermode principal SMPr identique à celui décrit en relation avec la figure 2, composé de quatre modes primaires gaussiens équidistants, et trois supermodes de perturbation SMPe1, SMPe2, SMPe3 respectivement issus du produit du supermode principal SMPr avec la fonction de Walsh Wₖ(x), pour k = 2, 3 et 4. Ce principe permettant d'établir une famille de supermodes d'entrée peut être généralisé lorsque les modes primaires sont répartis en matrice dans le plan d'entrée muni d'un repère cartésien, en employant cette fois les fonctions de Walsh à deux dimensions Wₖ(x,y) définies dans ce plan comme le produit de fonctions de Walsh à une dimension selon les axes x et y.

### Base de sortie

Dans le plan de sortie, on définit une famille de modes de sortie, préférentiellement une base orthonormée. Cette base comprend le mode cible qui contribuera à constituer le faisceau de sortie FLS et d'une pluralité de modes de déformation. La base de sortie comprend autant de modes de déformation qu'il existe de supermodes de perturbation dans la base d'entrée. A titre d'exemple, le mode cible pourra être choisi gaussien et les modes de déformation des modes d'Hermite-Gauss d'ordres successifs. Mais l'invention n'est nullement limitée à ce choix, et on pourra choisir la nature du mode cible et des modes de déformation selon le besoin.

Les modes de déformation peuvent être disposés dans le plan de sortie PS selon plusieurs configurations, ces configurations correspondant à des cas d'usage particuliers du dispositif optique 1.

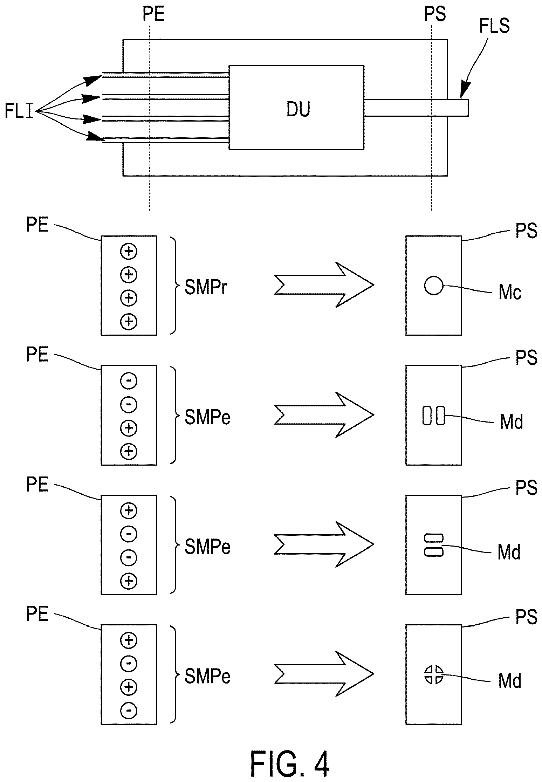

Selon une première configuration représentée sur la figure 4, les modes de déformation Md sont spatialement superposés au mode cible Mc dans le plan de sortie PS. Plus précisément, les modes de déformation recouvrent au moins partiellement ce mode cible, une portion du mode de déformation pouvant néanmoins déborder du mode cible. Dans ce cas, le faisceau lumineux de sortie FLS est entièrement formé du rayonnement transformé par le dispositif de conversion DC, et la part d'énergie du rayonnement incident qui ne se trouve pas dans le supermode principal est néanmoins transportée par le dispositif de conversion DC pour se concentrer spatialement au niveau du mode cible Mc. Cette configuration est avantageuse en ce que l'énergie du faisceau de sortie FLS reste bien concentrée autour du mode cible Mc, même si les faisceaux lumineux d'entrée FLI ne sont pas verrouillés, c'est-à-dire qu'ils présentent entre eux des écarts de phase et/ou d'intensité qui diffèrent de ceux définis par le supermode principal SMPr. Elle peut toutefois conduire à un léger dépointage ou à la distorsion du faisceau lumineux de sortie FLS suivant les modes de déformation Md effectivement illuminés par les faisceaux lumineux d'entrée FLI. Cet effet pourra être mis à profit dans certains modes de mis en oeuvre du dispositif optique 1, comme cela sera exposé dans une partie ultérieure de cette description.

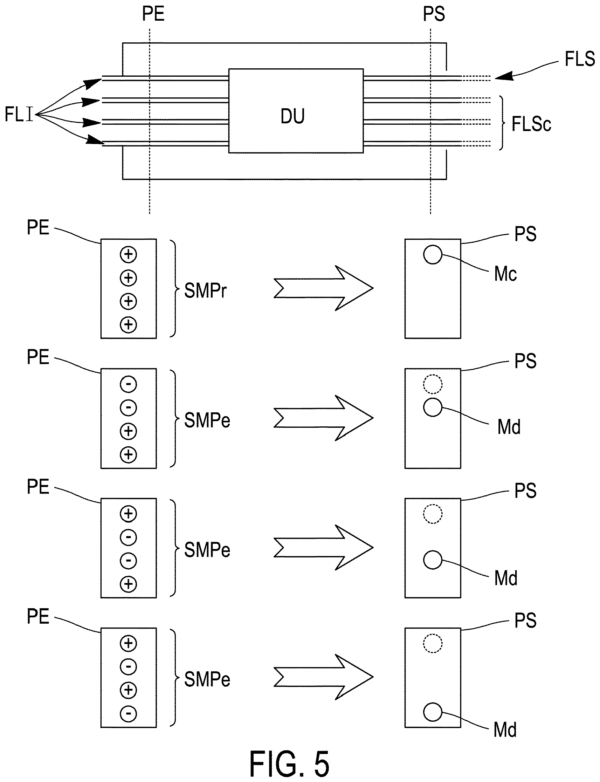

Selon une seconde configuration représentée sur la figure 5, les modes de déformation Md sont spatialement séparés du mode cible Mc dans le plan de sortie Ps. Dans ce cas, le faisceau lumineux de sortie FLS est exclusivement formé de la part du rayonnement transformé dans le mode cible Mc par le dispositif de conversion MC. Les modes de déformation peuvent contribuer à former au moins un faisceau de sortie complémentaire FLSc.

Comme cela est apparent sur la figure 5, les modes de déformation Md peuvent être séparés les uns des autres dans le plan de sortie PS, et l'on forme ainsi autant de faisceaux de sortie complémentaires FLSc. Mais cela ne forme pas une caractéristique essentielle de cette configuration, et on peut envisager que les modes de déformation se recouvrent au moins partiellement entre eux, pour par exemple former un unique ou un nombre limité de faisceaux de sortie complémentaires FLSc.

Lorsque les faisceaux lumineux d'entrée FLI ne sont pas verrouillés et présentent entre eux des écarts de phase et/ou d'intensité qui diffèrent de ceux définis par le supermode principal SMPr, et que le rayonnement incident présente donc au moins une composante selon l'un des supermodes de perturbation SMPe, le dispositif de conversion DC illumine le ou les mode(s) de déformation Md associé (s). Le faisceau lumineux de sortie complémentaires FLSc, ou une pluralité de tels faisceaux, qui en résulte peut être détecté(e) et utilisé(e), par exemple, pour asservir entre eux les faisceaux lumineux d'entrée FLI. On peut alternativement choisir de bloquer ce rayonnement lumineux, par diffusion ou absorption.

Cette configuration présente l'avantage de former un faisceau de sortie FLS exclusivement formé du mode cible, et donc de présenter une forme constante et parfaitement contrôlée même lorsque les faisceaux lumineux d'entrée FLI présentent des caractéristiques variables ou mal contrôlées. Toutefois, l'énergie du rayonnement lumineux incident n'est dans ce cas pas entièrement transportée dans le faisceau lumineux de sortie FLS.

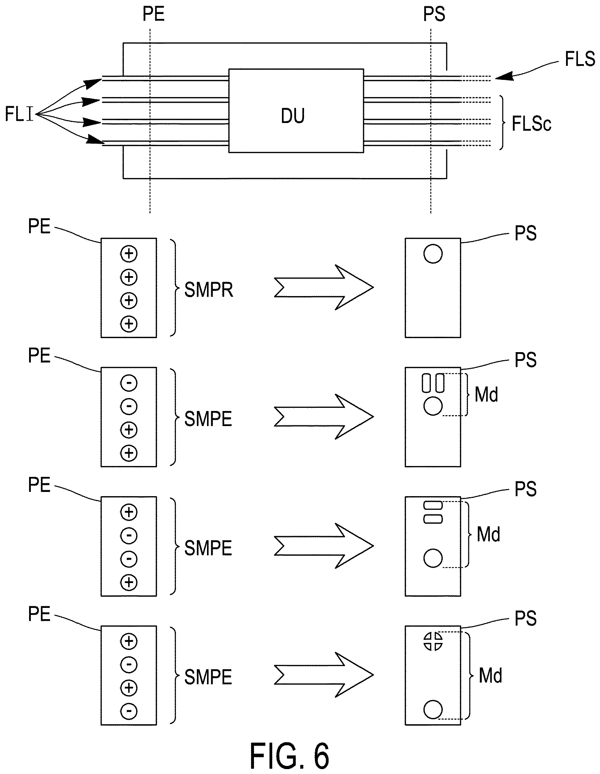

Selon une troisième approche, dite « hybride » et représentée sur la figure 6, on définit les modes de déformations Md pour qu'ils comprennent une portion spatialement superposée au mode cible Mc et une portion spatialement séparée du mode cible Mc.

À titre d'exemple, on peut former une collection de modes de déformation Mc tel qu'une partie 1-a de l'énergie de chaque mode soit placée dans un mode distinct, par exemple un mode de Hermite-Gauss, centré sur le mode cible, et tel que la partie complémentaire α de l'énergie chaque mode soit placée dans un mode, par exemple gaussien, spatialement séparé du mode cible Mc.

Cette configuration hybride entre la première et la deuxième configuration des modes de déformation permet de tirer le meilleur parti de ces configurations. On choisira de préférence α petit, par exemple inférieur à 0,01 afin de transporter une majeure partie de l'énergie du rayonnement incident vers le faisceau de sortie FLS. On préserve alors une petite partie complémentaire de cette énergie pour former le faisceau lumineux complémentaire FLSc ou une pluralité de tels faisceaux. On pourra par exemple exploiter cette partie complémentaire d'énergie pour tenter d'asservir en phase et/ou en intensité les faisceaux lumineux d'entrée et compenser les dépointés et les autres formes d'aberration qui peuvent apparaître dans le faisceau lumineux de sortie FLS, lorsque la première configuration est mise en oeuvre.

### Dispositif de conversion

Pour parfaitement contrôler la manière avec laquelle le dispositif optique 1 forme le faisceau lumineux de sortie FLS par combinaison des faisceaux lumineux d'entrée FLI, on prévoit un dispositif de conversion DC dont la fonction est d'associer un à un les modes de la base d'entrée aux modes de la base de sortie.

Comme cela est représenté sur les figures 3 à 5 pour chacune des configurations préférées des modes de déformation Md, le dispositif de conversion DC est conçu pour associer le supermode principal SMPr au mode cible Mc. On réalise ainsi la fonction principale du dispositif optique 1, combiner les faisceaux lumineux d'entrée FLI « verrouillés » pour former le faisceau de sortie FLS.

Le dispositif de conversion est également conçu pour associer les supermodes de perturbation SMPe aux modes de déformation Md. On s'assure ainsi que, dans le cas où les faisceaux lumineux d'entrée FLI ne sont pas « verrouillés », le rayonnement incident ne se propage pas de manière incontrôlée dans le dispositif optique 1 mais est guidé selon les modes de déformation choisis. On maîtrise de la sorte les caractéristiques du faisceau de sortie. D'une manière générale, un dispositif de conversion peut associer n'importe quel supermode de perturbation SMPe à n'importe quel mode de déformation Md, dans la mesure bien entendu où ces modes forment bien des bases comme on l'a précisé plus avant.

Lorsque les modes de déformation Md sont choisis selon la première ou la troisième configuration, pour au moins en partie se superposer spatialement au mode cible Mc, on pourra spécifiquement choisir d'associer certains supermodes de perturbation SMPe à certains modes de déformation Md pour chercher à contrôler les aberrations du faisceau de sortie FLI qui peuvent parfois se produire dans ces configurations.

Le dispositif de conversion DC peut être conçu pour appliquer d'autres traitements en complément de celui qui vient d'être présenté et/ou le dispositif optique 1 peut comprendre, en amont ou en aval du dispositif de conversion DC d'autres éléments optiques pour implémenter ces autres traitements.

On peut ainsi prévoir en aval du plan d'entrée du dispositif de conversion DC, des éléments optiques (par exemple un télescope) de mise en forme (convergence, focalisation) du faisceau de sortie FLS et/ou des faisceaux de sortie complémentaires FLSC.

Dans un exemple complémentaire, le dispositif de conversion DC peut être conçu pour réaliser, en complément de la formation du faisceau de sortie FLS, un filtrage modal de certains au moins des faisceaux lumineux d'entrée. Ce traitement peut par exemple être utile lorsque le faisceau d'entrée est formé d'une source laser fibrée de forte puissance. On sait que dans ce cas, l'énergie du faisceau tend à se répartir entre un mode principal « utile » de la fibre et des modes secondaires qui ne sont pas désirés. On peut configurer le dispositif de conversion pour qu'il sépare spatialement ce mode principal des modes secondaires. Le rayonnement associé aux modes secondaires peut ensuite être bloqué, par exemple par diffusion ou par absorption. Le rayonnement associé au mode principal contribue à former le rayonnement incident qui sera traité modalement pour former le faisceau lumineux de sortie. Le dispositif de conversion DC est muni d'un élément de blocage, d'absorption et/ou d'élimination du rayonnement correspondant aux modes secondaires (pour qu'ils ne contribuent pas à former le faisceau de sortie), et est conçu et configuré pour former un rayonnement incident filtré de ces modes secondaires.

Ce dispositif de filtrage modal peut être intégré au dispositif de conversion DC comme cela vient d'être décrit, ou distinct de du dispositif de conversion. Dans ce dernier cas, il est disposé dans le dispositif optique 1 entre le plan d'entrée PE et le dispositif de conversion DC.

Avantageusement, les bases d'entrée et de sortie sont établies pour que les supermodes et modes qui les composent présentent la caractéristique d'être à variables spatiales séparables. Dans les plans d'entrée et de sortie respectifs munis d'un repère cartésien (x, y), une telle caractéristique revient à ordonner les modes et les supermodes et à vérifier qu'il existe des couples d'indices (i,j) et des fonctions fᵢ(x) et gⱼ(y) tel que pour chaque mode/supermode Mᵢⱼ(x,y), on puisse établir Mᵢⱼ(x, y) =fᵢ(x) .gⱼ(y).

Lorsque cette propriété est bien présente et que le dispositif de conversion DC est conçu pour associer les supermodes de la base d'entrée aux modes de la base de sortie présentant les mêmes couples d'indices, on montre qu'il est possible de grandement simplifier la conception du dispositif de conversion, notamment lorsque celui-ci est mis en oeuvre par un dispositif de conversion multiplan. Une telle approche est décrite dans le document « Fabrication and Characterization of a Mode-selective 45-Mode Spatial Multiplexer based on Multi-Plane Light Conversion », Bade et al, Optical Fiber Communication Conférence Postdeadline Papers, OSA Technical Digest, Optical Society of America, 2018, paper Th4B.3, pp. 1-3 et dans la demande de brevet français 1851664.

Une fois les étapes préliminaires de conception réalisées, c'est à dire que l'on a posé les bases de modes d'entrée, de sortie et la transformation modale les modes d'entrée aux modes de sortie, un dispositif optique 1 conforme à la présente description peut être réalisé par l'intermédiaire d'un dispositif de conversion MC prenant par exemple la forme d'un MPLC ou de multiplexeurs exploitant des lames de phase et des lames séparatrices.

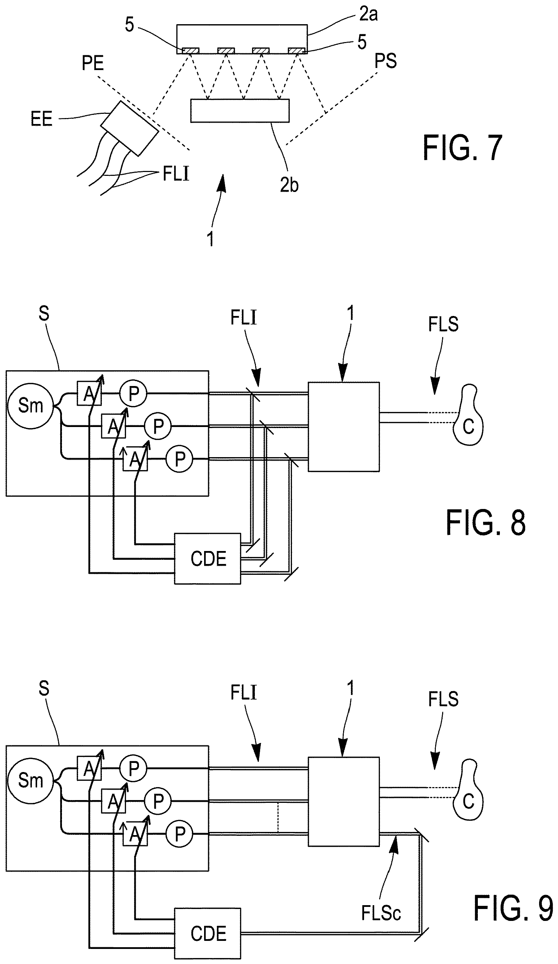

En référence à la figure 7, et à titre d'exemple, on a représenté un dispositif MPLC pouvant former un dispositif de conversion DC d'un dispositif optique conforme à l'invention. Sur l'architecture représentée, le MPLC est constitué de deux pièces optiques réfléchissantes 2a, 2b disposées en vis-à-vis l'une de l'autre. Des masques de phase 5 microstructurés sont portés par l'une de ces pièces. On forme ainsi une cavité multipassage dans lequel le rayonnement incident est réfléchi et déphasé une pluralité de fois au niveau de chaque masque 5 pour former le rayonnement transformé. Ici, les masques de phases sont tous portés par une lame de phase 2a présentant des zones microstructurées formant les masques 5, la seconde pièce optique 2b étant un simple miroir.

Une fois son architecture posée, la réalisation du dispositif de conversion MPLC se poursuit en déterminant le profil de phase de chaque masque 5 (sa microstructuration) conduisant à appliquer au rayonnement lumineux incident la conversion modale désirée (par exemple celle représentée sur l'une des figures 4 à 6). Le dispositif de conversion MPLC est ainsi apte à préparer le rayonnement lumineux transformé permettant de former le faisceau lumineux de sortie.

Les documents cités en introduction de cette description détaillée exposent dans le détail les méthodes de conception numérique qui peuvent être employées pour déterminer le profil de phase de chaque masque de phase 5. Les masques de phase peuvent ensuite être réalisés à partir du modèle numérique établi, par exemple par gravure, ou par photolithographie de la pièce optique qui les porte afin de la microstructurer. La microstructuration qui est apportée aux pièces optiques configure l'architecture choisie du MPLC pour qu'il mette en oeuvre la transformation modale désirée. On note que cette microstructuration est unique à la base de d'entrée, de sortie et à la transformation modale qui ont été préalablement définies et qui ont servi à sa conception numérique.

On pourrait appliquer des principes similaires de conception pour mettre en oeuvre le dispositif de conversion DC sous la forme d'un dispositif utilisant des lames séparatrices.

Quel que soit le mode choisi de mise en oeuvre du dispositif de conversion DC, celui-ci est configuré pour opérer une conversion modale du rayonnement lumineux incident, et ainsi préparer un rayonnement lumineux transformé. La conversion modale vise à transporter la part d'énergie du rayonnement incident présent dans le supermode principal dans le mode cible, et à transporter la part d'énergie de rayonnement incident présent dans les supermodes de perturbation dans les modes de déformation.

Le dispositif de conversion est disposé entre le plan d'entrée PE et le plan de sortie PS dans lesquelles on a défini les bases de modes. Ces plans peuvent être matérialisés par des étages optiques d'entrée et/ou de sortie. À titre d'exemple, et comme cela est représenté sur le schéma de principe de la figure 1, l'étage optique d'entrée EE peut être formé d'un faisceau de fibres optiques permettant de positionner les faisceaux lumineux d'entrée FLI en vis-à-vis du reste du dispositif optique 1. Comme on l'a précisé auparavant, l'étage de sortie peut comprendre des éléments optiques de mise en forme du faisceau de sortie et/ou des faisceaux de sortie complémentaires. Mais le plan d'entrée et/ou de sortie peut également être formé d'un plan fictif transverse aux faisceaux d'entrée ou de sortie, qui dans ce cas se propagent librement.

Les faisceaux lumineux d'entrée FLI peuvent être répartis, dans le plan d'entrée PE, selon une seule direction, en barrette. Ils peuvent également être répartis dans ce plan PE selon deux directions, en matrice ou selon une répartition hexagonale. On peut prévoir un nombre quelconque de tels faisceaux, par exemple de 2 à 10, plus de 10, voire plusieurs dizaines.

### Applications

En référence aux figures 8 à 11, on présente des systèmes de production d'un faisceau lumineux de sortie FLS mettant en oeuvre le dispositif optique 1 qui vient d'être présenté. Ces systèmes présentent au moins une source S produisant la pluralité de faisceaux d'entrée FLI. Le dispositif optique 1 est disposé en aval de cette source S de manière à positionner les faisceaux d'entrée FLI en correspondance optique avec les modes primaires du supermode principal défini dans le plan d'entrée PE. Le dispositif optique 1 produit le faisceau de sortie FLS qui se propage ici librement et qui peut être par exemple destiné à illuminer une cible C disposée en champ lointain. Le dispositif optique produit le cas échéant un ou une pluralité de faisceaux de sortie complémentaires FLSC.

Comment on l'a déjà énoncé, les faisceaux lumineux d'entrée FLI se propagent sensiblement tous dans la même direction et peuvent être répartis assez librement dans un plan transverse à cette direction, par exemple alignés selon une direction quelconque de ce plan, ou disposés en matrice ou en hexagone dans ce plan. Cette répartition, dans tous les cas, correspond précisément à la répartition des modes primaires du supermode principal de la base d'entrée du dispositif optique 1. Cette disposition peut être assurée par un étage d'entrée, par exemple un faisceau de fibres optiques en barrette, ou à deux dimensions.

Les faisceaux d'entrée FLI sont asservis en phase, c'est-à-dire qu'ils présentent un écart de phase avec un déphasage mutuel de consigne (ou dit autrement, ils présentent entre eux une différence de phase prédéterminée) que l'on cherche à rendre nulle. Ils sont également asservis en intensité, lorsque cette intensité n'est pas naturellement stable. A cet effet, les systèmes de production d'un faisceau lumineux de sortie prévoient un dispositif de commande CDE de la source.

Le déphasage mutuel de consigne peut correspondre au déphasage existant entre les modes primaires du supermode principal de la base d'entrée. Dans ce cas, les faisceaux lumineux d'entrée FLI sont asservis pour se projeter entièrement dans le supermode principal. Mais le déphasage mutuel de consigne peut également différer du déphasage existant entre les modes primaires du supermode principal, pour provoquer une projection imparfaite des faisceaux lumineux d'entrée FLI dans le supermode principal et illuminer des modes de déformation choisis de la base de sortie.

Dans les exemples représentés sur les figures 8 à 10, la source S comprend une source maître Sm produisant un rayonnement lumineux maître. Il peut par exemple s'agir d'une source laser. La source maître est reliée à un séparateur optique pour établir la pluralité de faisceaux d'entrée FLI à partir du rayonnement lumineux maître. Pour permettre l'asservissement en phase des faisceaux lumineux d'entrée FLI, chaque faisceau est couplé à un actuateur de phase A. La source S peut aussi prévoir également un étage d'amplification optique P associé à chaque faisceau pour fournir au dispositif optique 1 des faisceaux lumineux d'entrée FLI présentant une énergie suffisante et former un faisceau de sortie FLS convenable.

Les systèmes de production de faisceau de sorties présentés sur les figures prévoient également un dispositif de commande CDE de la phase de la pluralité de faisceaux qui élabore des signaux de commandes respectivement reliés aux actuateurs de phases de la source S. On pourrait également prévoir qu'il élabore des signaux de commande reliés aux amplificateurs, si cela s'avérait nécessaire. Par souci de simplicité, on désignera par « phase de la pluralité de faisceau », l'ensemble des phases de chacun des faisceau.

D'une manière générale, le dispositif de commande CDE élabore les signaux de commande des actuateurs de phase pour que les faisceaux lumineux d'entrée FLI présentent le déphasage mutuel de consigne. Pratiquement, on peut choisir d'utiliser un des faisceaux d'entrée comme faisceau de référence, et d'asservir la phase des faisceaux restant relativement à ce faisceau de référence. Dans ce cas, le dispositif de commande élabore les signaux de commande pour chacun des faisceaux restants seulement.

Le dispositif de commande CDE peut être intégré à la source S ou former un dispositif distinct du système de production, séparé de la source. Pour élaborer les signaux de commande, le dispositif de commande CDE présente au moins une entrée qui peut être reliée à différents rayonnements lumineux issus du système de production selon la nature de l'asservissement qui veut être réalisé. Comme cela est bien connu en soi, on prévoira des lames semi-réfléchissantes ou tout autre d'élément optique pour prélever une faible portion de ces faisceaux lumineux et les fournir au dispositif de commande CDE. Le dispositif de commande comprend des convertisseurs ou détecteurs lui permettant de traiter, numériquement ou analogiquement, ses entrées. Le dispositif de commande CDE reçoit également d'un dispositif extérieur de pilotage, ou alternativement élabore lui-même, la consigne de déphasage mutuel des faisceaux lumineux d'entrée FLI. Le dispositif de commande peut être mis en oeuvre par un calculateur de traitement du signal, par un composant logique programmable (FPGA selon l'acronyme anglo-saxon généralement utilisé) ou par tout autre dispositif présentant une puissance de calcul suffisant.

On a ainsi représenté sur la figure 8, une première architecture possible d'un système de production d'un faisceau de sortie. Dans cette architecture, le dispositif de commande CDE reçoit en entrée une portion de chaque faisceau lumineux d'entrée FLI du dispositif optique 1, avant donc que ceux-ci ne soient traités par le dispositif optique 1. Le dispositif de commande CDE élabore les signaux de commande des actuateurs de phase pour que les faisceaux lumineux d'entrée FLI présentent le déphasage mutuel de consigne.

Dans l'exemple représenté sur cette figure, le déphasage mutuel de consigne est figé et correspond avantageusement au déphasage mutuel existant entre les modes primaires composant le supermode principal du dispositif optique 1. On s'assure ainsi de transporter un maximum d'énergie du rayonnement d'entrée dans ce supermode principal et en conséquence, un maximum d'énergie le faisceau de sortie.

Le mode de mise en oeuvre de la figure 8 est compatible avec chacune des trois configurations des modes de déformation du dispositif optique présenté en référence figures 4 à 6. Il ne tire toutefois pas profit des faisceaux de sortie complémentaires FLSC que peuvent produire la deuxième ou la troisième configuration.

Lorsque ce mode de mis en oeuvre est associé à la première ou à la troisième configuration, pour lesquelles les modes de déformation sont au moins en partie superposés spatialement au mode cible, le déphasage mutuel de consigne peut être piloté pour chercher à illuminer au moins un mode de déformation de la base de sortie. On peut ainsi chercher à ajuster le pointé du faisceau lumineux de sortie FLS ou, plus généralement, lui donner une forme ou un profil particulier. Un tel profil peut par exemple permettre de compenser les perturbations de l'atmosphère qui tendent à modifier le profil du faisceau au cours de sa propagation entre le système de production et la cible.

Le mode de mis en oeuvre de la figure 8, tout comme ceux qui seront présentés dans la suite de cet exposé, bénéficie des avantages de la configuration des modes de déformation qu'il implémente :
Dans le cas de la première ou de la troisième configuration, l'énergie du faisceau de sortie est importante et concentrée autour du mode cible que les faisceaux d'entrée soient parfaitement, imparfaitement ou pas du tout asservis.
- Dans le cas de la deuxième configuration ou troisième configuration, la forme du faisceau de sortie correspond précisément à celle du mode cible, au détriment d'une intensité qui peut être fluctuante ou faible, lorsque le déphasage mutuel des faisceaux d'entrée s'écarte du déphasage mutuel des modes primaires du supermode principal.

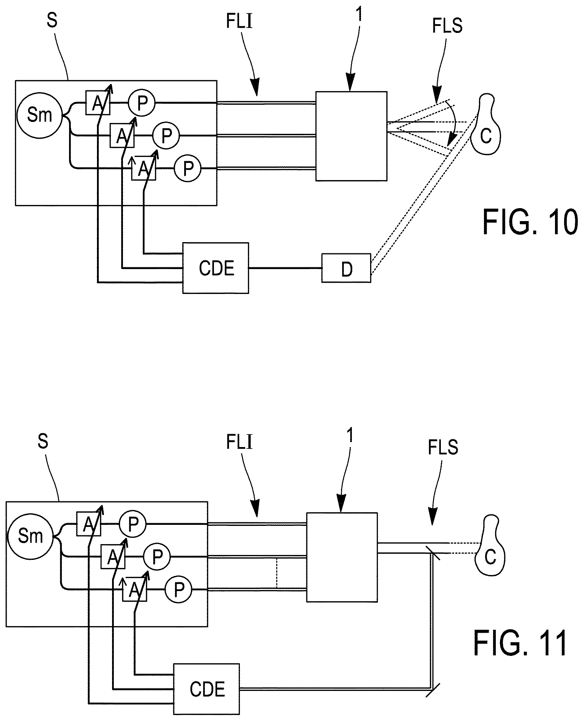

La figure 11 présente une autre architecture possible d'un système de production d'un faisceau de sortie. Le dispositif de commande CDE reçoit ici en entrée une portion du faisceau lumineux de sortie FLS du dispositif optique 1.

Le mode de mise en oeuvre de la figure 11 est compatible avec chacune des trois configurations des modes de déformation du dispositif optique présenté en référence figures 4 à 6. Il ne tire toutefois pas profit des faisceaux de sortie complémentaires FLSC que peuvent produire la deuxième ou la troisième configuration. Lorsque la deuxième configuration est employée, dans laquelle le faisceau lumineux de sortie est exclusivement composé du mode cible, le dispositif de commande CDE peut exploiter l'information sur la part d'énergie présente dans le faisceau (par exemple relativement à l'énergie du rayonnement incident) dans une boucle de rétroaction pour asservir en phase les faisceaux d'entrée au déphasage mutuel de consigne.

Lorsque ce mode de mis en oeuvre est associé à la première ou à la troisième configuration, pour lesquelles les modes de déformation sont au moins en partie superposés spatialement au mode cible, le déphasage mutuel de consigne peut être piloté pour chercher à illuminer au moins un mode de déformation de la base de sortie. Comme dans le mode de mise en oeuvre précédent, le dispositif de commande CDE peut ainsi chercher à donner une forme ou un profil particulier au faisceau de sortie FLS.

La figure 9 présente un deuxième mode de mise en oeuvre d'un système de production d'un faisceau de sortie particulièrement adapté à la deuxième ou à la troisième configuration des modes de déformation. Le système présente des faisceaux lumineux de sortie complémentaires FLSC ici respectivement associés aux modes de déformation qui ne sont pas spatialement superposées au mode cible (deuxième configuration) ou à la portion des modes de déformation qui ne sont pas spatialement superposées au mode cible (troisième configuration).

Les faisceaux lumineux de sortie complémentaires FLSC forment dans l'exemple représenté sur la figure 9 des entrées du dispositif de commande CDE. Celui-ci a donc accès direct aux modes de déformation illuminés par le dispositif optique. Il peut donc élaborer les signaux de commande des actuateurs de phase dans une boucle d'asservissement cherchant à maximiser l'énergie transportée dans le mode cible et/ou la portion des modes de déformation qui composent le faisceau de sortie FLS.

Lorsque les modes de déformation sont répartis spatialement selon la deuxième configuration dans laquelle le faisceau lumineux de sortie est formé exclusivement du mode cible, il n'est pas possible de modifier la forme du faisceau lumineux de sortie. Il y a peu d'intérêt dans ce cas à chercher à piloter la consigne de déphasage mutuelle et celle-ci est avantageusement fixée pour correspondre au déphasage mutuel des modes primaires du supermode principal.

A contrario, lorsque la troisième configuration des modes de déformation est mise en oeuvre dans laquelle seule une portion des modes de déformation recouvre le mode cible, on peut prévoir, comme dans le mode de mise en oeuvre de la figure 8 de modifier la consigne de déphasage mutuel pour ajuster le pointé, le profil, ou plus généralement la forme du faisceau de sortie FLS. Les faisceaux lumineux de sortie complémentaire FLSC permettent alors au dispositif de commande CDE de déterminer précisément quels modes de déformation sont illuminés, et avec quelle intensité, ce qui forme une information permettant de contrôler plus précisément, en boucle de rétroaction, la forme du faisceau de sortie FLS.

La figure 10 présente un troisième mode de mis en oeuvre du système de production d'un faisceau de sortie conforme à l'invention. Ce mode de mis en oeuvre est compatible avec la première ou la troisième configuration des modes de déformation selon laquelle une partie au moins des modes de déformation sont spatialement superposées au mode cible. Comment on l'a vu, on peut de la sorte ajuster la forme du faisceau de sortie, par exemple son pointé ou son profil.

Dans ce troisième mode de mise en oeuvre, les entrées du dispositif de commande CDE sont couplées au rayonnement réfléchi par la cible C. On prévoit dans ce cas un détecteur D disposé relativement aux autres éléments du système en un endroit propice pour recevoir ce rayonnement réfléchi. Le détecteur D peut ainsi fournir une information de phase et/ou d'intensité fiable au dispositif de commande CDE. Cette information sur le rayonnement réfléchi par la cible C permet notamment au dispositif de commande CDE d'ajuster dynamiquement le pointé du faisceau lumineux de sortie FLS pour chercher à suivre la cible.

Dans une approche particulièrement avantageuse, le détecteur est intégré au MPLC formant le dispositif de conversion DC du dispositif optique 1. Une fraction du rayonnement réfléchi est généralement dirigée du côté du MPLC d'où est issu le faisceau de sortie. Le MPLC est alors configuré pour décomposer le rayonnement réfléchi selon une deuxième base de modes d'entrée définie cette fois dans le plan de sortie du MPLC. Cette deuxième base de sortie est associée par le dispositif de conversion MPLC avec une seconde base de sortie, qui peut être définie dans le plan d'entrée ou dans un plan complémentaire du dispositif de conversion. La transformation complémentaire entre la deuxième base d'entrée et la deuxième base de sortie réalisée par le dispositif de conversion MPLC peut très simplement consister à guider le rayonnement réfléchi, ou un mode de ce rayonnement, vers une sortie optique complémentaire du dispositif optique 1 qui peut être couplée au dispositif de commande CDE.

Les quatre modes de mise en oeuvre du système de production d'un faisceau de sortie qui viennent d'être présentés peuvent être combinés, notamment lorsque les modes de déformation du dispositif optique 1 sont choisis selon la troisième configuration, hybride. Le dispositif de commande CDE peut ainsi présenter de multiples entrées respectivement reliées aux faisceaux lumineux d'entrée FLI et/ou au faisceau lumineux de sortie FLS et/ou au faisceau lumineux de sortie complémentaire FLSC et/ou au rayonnement réfléchi ou à une partie de celui-ci. On peut donc de la sorte réaliser une commande des actuateurs de phases de la source très flexible et répondre à de nombreux cas d'usage du système de production.

Bien entendu l'invention n'est pas limitée aux modes de mise en oeuvre décrits et on peut y apporter des variantes de réalisation sans sortir du cadre de l'invention tel que défini par les revendications.

## Revendications

1. Dispositif optique (1) pour former un faisceau lumineux de sortie (FLS) présentant au moins un mode cible (Mc), par combinaison d'une pluralité de faisceaux lumineux d'entrée (FLI) asservis en phase formant collectivement un rayonnement lumineux incident, le dispositif (1) présentant :
- un plan d'entrée (PE) transverse aux faisceaux lumineux d'entrée (FLI) dans lequel est définie une base de modes d'entrée composée d'un supermode principal (SMPr) formé d'une combinaison linéaire de modes primaires présentant chacun une phase et une amplitude déterminée, les modes primaires étant respectivement associés spatialement avec les faisceaux lumineux d'entrée (FLI) et dans lequel est définie une pluralité de supermodes de perturbation (SMPe) ;
- un plan de sortie (PS) transverse au faisceau lumineux de sortie (FLS) dans lequel est définie une base de modes de sortie composée du mode cible (Mc) et d'une pluralité de modes de déformation (Md);
- un dispositif de conversion lumineux multiplan (DC), comprenant une pluralité de zones microstructurées disposées sur au moins un élément optique (2a, 2b) pour intercepter et modifier spatialement la phase du rayonnement lumineux incident au cours d'une pluralité de réflexions ou de transmissions séparées par une propagation libre, le dispositif de conversion lumineux multiplan (DC) disposé entre le plan d'entrée (PE) et le plan de sortie (PS), et la microstructuration de la pluralité de zones microstructurées étant configurée pour opérer une conversion modale du rayonnement incident et préparer un rayonnement transformé, la conversion modale visant à transporter la part d'énergie du rayonnement incident présente dans le supermode principal (SMPr) dans le mode cible (Mc), et visant à transporter la part d'énergie du rayonnement incident présente dans les supermodes de perturbation (SMPe) dans les modes de déformation (Md).

2. Dispositif optique (1) selon la revendication précédente dans lequel les faisceaux lumineux d'entrée (FLI) sont répartis linéairement en barrette selon une unique direction du plan d'entrée (PE), ou en matrice ou en hexagone selon deux directions du plan d'entrée (PE).

3. Dispositif optique (1) selon la revendication précédente dans lequel les supermodes de la base d'entrée présentent tous la même intensité.

4. Dispositif optique (1) selon l'une des revendications précédentes dans lequel le mode cible (Mc) est choisi dans la liste constituée d'un mode gaussien, d'un mode à plateau plat en champ lointain ou en champ proche, de forme circulaire, rectangulaire ou carré.

5. Dispositif optique (1) selon l'une des revendications précédentes dans lequel la base d'entrée comprend N-1 supermodes de perturbations (SMPe), un supermode de perturbation d'ordre k, 2<=k<=N étant défini comme le produit, en tout point du plan d'entrée (x,y), du supermode principal avec la fonction de Walsh d'ordre k, Wk(x,y), N représentant le nombre de faisceaux lumineux d'entrée (FLI).

6. Dispositif optique (1) selon l'une des revendications précédentes comprenant un dispositif de filtrage modal intégré dans le dispositif de conversion (DC) ou disposé entre le plan d'entrée (PE) et le dispositif de conversion (DC), pour éliminer des modes secondaires des faisceaux lumineux d'entrée (FLI).

7. Dispositif optique (1) selon l'une des revendications précédentes dans lequel les modes de déformation (Md) sont spatialement superposés au mode cible (Mc) dans le plan de sortie (PS) et le faisceau lumineux de sortie (FLS) est entièrement formé du rayonnement transformé par le dispositif de conversion (DC).

8. Dispositif optique (1) selon l'une des revendications 1 à 6 dans lequel les modes de déformation (Md) sont spatialement séparés du mode cible (Mc) dans le plan sortie (PS) et le faisceau lumineux de sortie (FLS) est uniquement formé de la part du rayonnement transformé dans le mode cible (Mc) par le dispositif de conversion (DC).

9. Dispositif optique (1) selon la revendication précédente dans lequel les modes de déformation (Md) sont spatialement séparés les uns des autres et le dispositif (1) forme également des faisceaux lumineux de sortie complémentaires (FLSc), respectivement formés de la part du rayonnement transformé dans les modes de déformation (Md) par le dispositif de conversion (DC).

10. Dispositif optique (1) selon l'une des revendications 1 à 6 dans lequel les modes de déformation (Md) présentent une portion spatialement superposée au mode cible (Mc) et une autre portion des modes de déformation (Md) étant spatialement séparée du mode cible (Mc).

11. Dispositif optique (1) selon la revendication précédente dans lequel les portions des modes de déformation (Md) spatialement séparées du mode cible (Mc) sont également spatialement séparés les unes des autres et forment des faisceaux lumineux de sortie complémentaires (FLSc).

12. Système de production d'un faisceau lumineux de sortie (FLS), comprenant :
- au moins une source (S) produisant une pluralité de faisceaux asservis en phase ;
- un dispositif de commande (CDE) de la phase de la pluralité de faisceaux ;
- un dispositif optique (1) selon l'une des revendications précédentes, le dispositif optique (1) étant disposé en aval de la source (S) de manière à mettre en correspondance optique la pluralité de faisceaux avec les modes primaires du supermode principal (SMPr) du plan d'entrée (PE) du dispositif (1).

13. Système de production selon la revendication précédente dans lequel le dispositif de commande (CDE) est configuré pour asservir la phase de la pluralité de faisceaux à une consigne de déphasage mutuel correspondant au déphasage mutuel des modes primaires du supermode principal (SMPr).

14. Système de production selon la revendication 12 dans lequel le dispositif de commande (CDE) est configuré pour asservir la phase de la pluralité de faisceaux à une consigne de déphasage mutuelle pilotée pour modifier la forme du faisceau de sortie (FLS).

15. Système de production selon l'une des revendications 12 à 14 dans lequel le faisceau lumineux de sortie (FLS) est destiné à éclairer une cible (C) en champ lointain et le système de production comprend au moins un détecteur (D) d'un rayonnement réfléchi par la cible (C), le détecteur (D) étant relié au dispositif de commande (CDE).

## Patentansprüche

1. Optische Vorrichtung (1) zum Ausbilden eines Ausgangslichtbündels (FLS), das mindestens einen Zielmodus (Mc) aufweist, durch Kombinieren einer Vielzahl von phasenverriegelten Eingangslichtbündeln (FLI), die kollektiv eine einfallende Lichtstrahlung ausbildet, wobei die Vorrichtung (1) aufweist:
- eine Eingangsebene (PE) quer zu den Eingangslichtbündeln (FLI), wobei eine Eingangsmodibasis definiert ist, die aus einem wesentlichen Supermodus (SMPr) besteht, der aus einer linearen Kombination von primären Modi ausgebildet ist, die jeweils eine bestimmte Phase und Amplitude aufweisen, wobei die primären Modi den Eingangslichtbündeln (FLI) jeweils räumlich zugeordnet sind und wobei eine Vielzahl von Störungssupermodi (SMPe) definiert ist;
- eine Ausgangsebene (PS) quer zu dem Ausgangslichtbündel (FLS), wobei eine Ausgangsmodibasis definiert ist, die aus dem Zielmodus (Mc) und einer Vielzahl von Verformungsmodi (Md) besteht;
- eine Mehrebenenlichtkonversionsvorrichtung (DC), umfassend eine Vielzahl von mikrostrukturierten Bereichen, die auf mindestens einem optischen Element (2a, 2b) angeordnet ist, um die Phase der einfallenden Lichtstrahlung während einer Vielzahl von Reflexionen oder Übertragungen, die durch eine freie Ausbreitung getrennt sind, abzufangen und räumlich zu modifizieren, wobei die Mehrebenenlichtkonversionsvorrichtung (DC) zwischen der Eingangsebene (PE) und der Ausgangsebene (PS) angeordnet ist und die Mikrostrukturierung der Vielzahl von mikrostrukturierten Bereichen konfiguriert ist, um eine modale Konversion der einfallenden Strahlung durchzuführen und eine umgewandelte Strahlung bereitzustellen, wobei die modale Konversion darauf abzielt, den Teil der Energie der einfallenden Strahlung, der in dem wesentlichen Supermodus (SMPr) vorhanden ist, in dem Zielmodus (Mc) zu transportieren, und darauf abzielt, den Teil der Energie der einfallenden Strahlung, der in den Störungssupermodi (SMPe) vorhanden ist, in den Verformungsmodi (Md) zu transportieren.

2. Optische Vorrichtung (1) nach dem vorstehenden Anspruch, wobei die Eingangslichtbündel (FLI) entlang einer einzigen Richtung der Eingangsebene (PE) oder in einer Matrix oder in einem Sechseck entlang zweier Richtungen der Eingangsebene (PE) linear stabförmig verteilt sind.

3. Optische Vorrichtung (1) nach dem vorstehenden Anspruch, wobei die Supermodi der Eingangsbasis alle die gleiche Intensität aufweisen.

4. Optische Vorrichtung (1) nach einem der vorstehenden Ansprüche, wobei der Zielmodus (Mc) aus der Liste ausgewählt ist, bestehend aus einem Gaußschen Modus, einem Fernfeld- oder Nahfeldmodus mit ebener Platte, mit kreisförmiger, rechteckiger oder quadratischer Form.

5. Optische Vorrichtung (1) nach einem der vorstehenden Ansprüche, wobei die Eingangsbasis N-1 Störungssupermodi (SMPe), einen Störungssupermodus der Ordnung k umfasst, wobei 2<=k<=N als das Erzeugnis, in jeder Hinsicht der Eingangsebene (x,y), des wesentlichen Supermodus mit der Walsh-Funktion der Ordnung k, Wk(x,y), definiert ist, wobei N die Anzahl der Eingangslichtbündel (FLI) darstellt.

6. Optische Vorrichtung (1) nach einem der vorstehenden Ansprüche, umfassend eine Modalfiltervorrichtung, die in die Konversionsvorrichtung (DC) integriert oder zwischen der Eingangsebene (PE) und der Konversionsvorrichtung (DC) angeordnet ist, um sekundäre Modi der Eingangslichtbündel (FLI) zu beseitigen.

7. Optische Vorrichtung (1) nach einem der vorstehenden Ansprüche, wobei die Verformungsmodi (Md) den Zielmodus (Mc) in der Ausgangsebene (PS) räumlich überlagern und das Ausgangslichtbündel (FLS) vollständig aus Strahlung ausgebildet ist, die durch die Konversionsvorrichtung (DC) umgewandelt wird.

8. Optische Vorrichtung (1) nach einem der Ansprüche 1 bis 6, wobei die Verformungsmodi (Md) von dem Zielmodus (Mc) in der Ausgangsebene (PS) räumlich getrennt sind und das Ausgangslichtbündel (FLS) einzig aus dem Teil der Strahlung ausgebildet ist, der in dem Zielmodus (Mc) durch die Konversionsvorrichtung (DC) umgewandelt wird.

9. Optische Vorrichtung (1) nach dem vorstehenden Anspruch, wobei die Verformungsmodi (Md) voneinander räumlich getrennt sind und die Vorrichtung (1) auch komplementäre Ausgangslichtbündel (FLSc) ausbildet, die jeweils aus dem Teil der Strahlung ausgebildet sind, der in den Verformungsmodi (Md) durch die Konversionsvorrichtung (DC) umgewandelt wird.

10. Optische Vorrichtung (1) nach einem der Ansprüche 1 bis 6, wobei die Verformungsmodi (Md) einen Anteil, der den Zielmodus (Mc) räumlich überlagert, und einen anderen Anteil der Verformungsmodi (Md) aufweisen, der von dem Zielmodus (Mc) räumlich getrennt ist.

11. Optische Vorrichtung (1) nach dem vorstehenden Anspruch, wobei die Anteile der Verformungsmodi (Md), die von dem Zielmodus (Mc) räumlich getrennt sind, auch voneinander räumlich getrennt sind und komplementäre Ausgangslichtbündel (FLSc) ausbilden.

12. System zum Erzeugen eines Ausgangslichtbündels (FLS), umfassend:
- mindestens eine Quelle (S), die eine Vielzahl von phasenverriegelten Bündeln erzeugt;
- eine Steuervorrichtung (CDE) der Phase der Vielzahl von Bündeln;
- eine optische Vorrichtung (1) nach einem der vorstehenden Ansprüche, wobei die optische Vorrichtung (1) stromabwärts der Quelle (S) angeordnet ist, so dass die Vielzahl von Bündeln in optischer Verbindung mit den primären Modi des wesentlichen Supermodus (SMPr) der Eingangsebene (PE) der Vorrichtung (1) steht.

13. Erzeugungssystem nach dem vorstehenden Anspruch, wobei die Steuervorrichtung (CDE) konfiguriert ist, zum Einstellen der Phase der Vielzahl von Bündeln auf einen Sollwert einer gegenseitigen Phasenverschiebung konfiguriert ist, der mit der gegenseitigen Phasenverschiebung der primären Modi des wesentlichen Supermodus (SMPr) verbunden ist.

14. Erzeugungssystem nach dem Anspruch 12, wobei die Steuervorrichtung (CDE) zum Einstellen der Phase der Vielzahl von Bündeln auf einen geführten Sollwert einer gegenseitigen Phasenverschiebung zum Modifizieren der Form des Ausgangsbündels (FLS) konfiguriert ist.

15. Produktionssystem nach einem der Ansprüche 12 bis 14, wobei das Ausgangslichtbündel (FLS) dafür bestimmt ist, ein Ziel (C) in dem Fernfeld zu beleuchten und das Erzeugungssystem mindestens einen Sensor (D) für eine durch das Ziel (C) reflektierte Strahlung umfasst, wobei der Sensor (D) mit der Steuervorrichtung (CDE) verknüpft ist.

## Claims

1. Optical device (1) for forming an output light beam (FLS) having at least one target mode (Mc), by combining a plurality of phase-locked input light beams (FLI) which collectively form incident light radiation, the device (1) having:
- an input plane (PE) transverse to the input light beams (FLI) in which a base of input modes is defined, which base is composed of a main supermode (SMPr) formed by a linear combination of primary modes each having a set phase and amplitude, the primary modes being respectively spatially associated with the input light beams (FLI), and in which a plurality of disturbance supermodes (SMPe) is defined;
- an output plane (PS) transverse to the output light beam (FLS) in which a base of output modes composed of the target mode (Mc) and a plurality of deformation modes (Md) is defined;
- a multiplane light conversion device (DC) comprising a plurality of microstructured zones arranged on at least one optical element (2a, 2b) to intercept and spatially modify the phase of the incident light radiation during a plurality of reflections or transmissions separated by free propagation, the multiplane light conversion device (DC) being arranged between the input plane (PE) and the output plane (PS), and the microstructuring of the plurality of microstructured zones being configured to perform a modal conversion of the incident radiation and to prepare transformed radiation, the modal conversion aiming to transport the part of the energy of the incident radiation present in the main supermode (SMPr) into the target mode (Mc), and aiming to transport the part of the energy of the incident radiation present in the disturbance supermodes (SMPe) into the deformation modes (Md).

2. Optical device (1) according to the preceding claim, wherein the input light beams (FLI) are distributed linearly in a strip along a single direction of the input plane (PE), or in a matrix or in a hexagon along two directions of the input plane (PE).

3. Optical device (1) according to the preceding claim, wherein the supermodes of the input base all have the same intensity.

4. Optical device (1) according to any of the preceding claims, wherein the target mode (Mc) is selected from the list consisting of a Gaussian mode and of a top-hat mode, in the far field or in the near field, of circular, rectangular or square shape.

5. Optical device (1) according to any of the preceding claims, wherein the input base comprises N-1 disturbance supermodes (SMPe), a disturbance supermode of the order k, 2<=k<=N being defined as the product, at any point in the input plane (x,y), of the main supermode with the Walsh function of the order k, Wk(x,y), N representing the number of input light beams (ELI).

6. Optical device (1) according to any of the preceding claims, comprising a modal filtering device integrated into the conversion device (DC) or arranged between the input plane (PE) and the conversion device (DC) in order to eliminate secondary modes of the input light beams (ELI).

7. Optical device (1) according to any of the preceding claims, wherein the deformation modes (Md) are spatially superimposed on the target mode (Mc) in the output plane (PS) and the output light beam (FLS) is entirely formed of radiation transformed by the conversion device (DC).

8. Optical device (1) according to any of claims 1 to 6, wherein the deformation modes (Md) are spatially separated from the target mode (Mc) in the output plane (PS) and the output light beam (FLS) is formed exclusively from the part of the radiation transformed into the target mode (Mc) by the conversion device (DC).

9. Optical device (1) according to the preceding claim, wherein the deformation modes (Md) are spatially separated from each other and the device (1) also forms complementary output light beams (FLSc), each formed from the part of the radiation transformed into the deformation modes (Md) by the conversion device (DC).

10. Optical device (1) according to any of claims 1 to 6, wherein the deformation modes (Md) have a portion which is spatially superimposed onto the target mode (Mc), another portion of the deformation modes (Md) being spatially separated from the target mode (Mc).

11. Optical device (1) according to the preceding claim, wherein the portions of the deformation modes (Md) spatially separated from the target mode (Mc) are also spatially separated from each other and form complementary output light beams (FLSc).

12. System for producing an output light beam (FLS), comprising:
- at least one source (S) producing a plurality of phase-locked beams;
- a device (CDE) for controlling the phase of the plurality of beams;
- an optical device (1) according to any of the preceding claims, the optical device (1) being arranged downstream of the source (S) so as to bring the plurality of beams into optical correspondence with the primary modes of the main supermode (SMPr) of the input plane (PE) of the device (1).

13. Production system according to the preceding claim, wherein the control device (CDE) is configured to lock the phase of the plurality of beams to a mutual phase shift setpoint corresponding to the mutual phase shift of the primary modes of the main supermode (SMPr).

14. Production system according to claim 12, wherein the control device (CDE) is configured to lock the phase of the plurality of beams to a controlled mutual phase shift setpoint in order to modify the shape of the output beam (FLS).

15. Production system according to any of claims 12 to 14, wherein the output light beam (FLS) is intended to illuminate a target (C) in the far field and the production system comprises at least one detector (D) for detecting radiation reflected by the target (C), the detector (D) being connected to the control device (CDE).
